# FASCICULE DE BREVET EUROPEEN

(11) **EP 0 876 238 B1**
(45) Date de publication et mention de la délivrance du brevet: **03.05.2000**
(21) Numéro de dépôt: 97900903.2
(22) Date de dépôt: 22.01.1997
(51) Int. Cl.: B23Q 1/01, B23P 21/00

(54) **CELLULE D'ASSEMBLAGE A CONFIGURATION FONCTIONNELLE ADAPTABLE**
MONTAGEZELLE MIT ANPASSBARER KONFIGURATIONSFUNKTION
ASSEMBLY CELL WITH ADAPTABLE FUNCTIONAL CONFIGURATION

(30) Priorité: 22.01.1996 BE 9600058
(43) Date de publication de la demande: 11.11.1998
(73) Titulaire: Leroy, André, 7030 Mons (BE)
(72) Inventeur: Leroy, André, 7030 Mons (BE)
(74) Mandataire: Van Malderen, Joelle
(86) Numéro de dépôt international: BE9700010
(87) Numéro de publication internationale: WO9727024

(56) Documents cités:
- DE-A- 4 138 139
- US-A- 4 681 043
- MECANIQUE MATERIAUX ELECTRICITE, no. 361, Janvier 1980, PARIS FR, pages 28-34, XP002013400 BERTRAND: "L'évolution de la machine automatique d'assemblage"

## Description

L'objet de l'invention est une cellule d'assemblage à configuration fonctionnelle adaptable, constituant un poste de travail simple ou multiple, commandé automatiquement ou exploité par un opérateur et agissant directement dans le flux de produits en cours de montage ou en dérivation de celui-ci.

L'expression "cellule" implique qu'il s'agit d'une entité matérielle et l'expression "à configuration adaptable" signifie que la cellule comprend deux parties : une première, que nous appellerons "structure de base", en principe indépendante de la fonction unique ou multiple de la cellule, et une deuxième, qui comprend l'appareillage particulier, dit appareillage fonctionnel, qui permet au poste de travail que constitue la cellule de remplir sa fonction dans le système d'assemblage où il s'intègre, et qui comporte aussi des composants de la cellule à rapporter sur sa structure de base pour y intégrer les appareillages fonctionnels.

Nous entendons ici par fonction de la cellule dans un système d'assemblage, aussi bien une fonction d'assemblage proprement dite (implantation, solidarisation) qu'une fonction auxiliaire liée à certaines opérations d'assemblage proprement dites pour les préparer ou les parachever (découpage, application préalable d'un moyen de solidarisation, traitement postérieur à la solidarisation, contrôle,...).

En outre, dans la cellule à configuration fonctionnelle adaptable dont il est question ici sont aussi intégrés les moyens de commande éventuels, ainsi que les circuits et tout moyen de distribution d'information, de courant et de fluide nécessaire au fonctionnement propre du poste de travail que la cellule est appelée à constituer, ainsi que les interfaces permettant d'alimenter ces moyens depuis l'extérieur.

La cellule comporte aussi, quand il est nécessaire, l'appareillage qui lui permet de prélever et de remettre dans la file de produits en cours d'assemblage celui qu'elle doit immobiliser et supporter ou manipuler pour y appliquer les opérations qui répondent à la fonction du poste.

Enfin, la cellule contient les interfaces avec l'opérateur ou le système de supervision.

Le brevet EP0115357 A2 décrit une cellule d'assemblage conforme à la description précédente, et on peut, sous certaines réserves, considérer qu'il en est de même de la demande de brevet EP0517003 A2.

La cellule que décrit le brevet EP0115357 A2 présente une structure de base essentiellement constituée d'un plateau standard contenant un tronçon d'un convoyeur principal et éventuellement les éléments de convoyeur destinés à constituer une dérivation pour ce convoyeur principal. Les appareillages fonctionnels, pourvus de moyens d'assemblage, sont rapportés, hors ligne, sur le plateau, et la cellule entièrement montée, dépourvue d'interface avec le sol, est rapportée sur une structure centrale constituant le support commun à toutes les cellules. Les postes de travail sont ainsi inévitablement jointifs et, si une certaine longueur de convoyage est nécessaire entre deux postes successifs pour former par exemple un stock tampon, il demande à être constitué d'une cellule particulière, à insérer entre les deux postes.

La configuration de la ligne ne permet l'accès aux cellules que par un seul côté, tandis que la forme plate de la structure de base ne rend pas la cellule apte à supporter des sollicitations importantes en provenance des appareillages fonctionnels.

Les plateaux comportent, lorsque la fonction le demande, un plafond supporté par des montants latéraux. Ce plafond est occupé par un coffret regroupant les moyens de commande et les divers circuits électriques nécessaires au fonctionnement de la cellule. Chaque plateau est équipé de moyens de raccordement rapide avec les réseaux de distribution logés dans le support central.

Dans la demande de brevet EP0517003 A2, la structure de base, quand elle est décrite matériellement, apparaît comme une structure de table rigide, c'est à dire s'identifie dans son concept général, à la structure portante que l'on trouve actuellement dans beaucoup de cellules à configuration non adaptable : cette structure de base peut donc difficilement passer pour une originalité en soi. On observera encore qu'il n'est jamais prévu d'utiliser à des fins mécaniques le plafond que l'on peut être amené à construire au dessus de cette table.

Une particularité essentielle de la structure de base de la cellule objet de l'invention est précisément de n'inclure aucune table et aucun plateau. Cette structure de base,, qui constitue la majeure partie de la structure portante globale de la cellule, reste par ailleurs totalement indépendante des moyens de convoyage et de la fonction du poste de travail que la cellule sera amenée à constituer : elle est donc conservée telle quelle pour réaliser des postes de travail assurant la plupart des fonctions très diversifiées que l'on rencontre dans les systèmes d'assemblage.

La cellule objet de l'invention est nettement caractérisée par son concept même, très différent de ceux qui ont été retenus jusqu'ici pour former des cellules d'assemblage à configuration variable : ce concept lui donne, pour le constructeur comme pour l'utilisateur, des avantages qui seront énumérés plus loin, mais on peut dire dès à présent qu'elle se distingue déjà au premier coup d'oeil, par sa seule silhouette, de tout ce qui a été fait en la matière, et plus particulièrement des réalisations évoquées ci-dessus.

Dans la cellule objet de l'invention, la structure de base est constituée de deux membrures latérales plates échancrées en forme de G, parallèles à un même plan vertical, et d'un système de liaison entre ces membrures constitué de deux entretoises horizontales, l'une, dite inférieure, située à la partie inférieure des membrures et l'autre, dite dorsale, située à une hauteur voisine de la base des échancrures, à l'opposé de celles-ci. Ce sont les membrures qui, par l'intermédiaire de pieds éventuellement réglables en hauteur, constituent l'interface de la cellule avec le sol. Le caractère réglable des pieds permet non seulement de compenser les irrégularités possibles d'un sol d'atelier, mais de situer, dans les possibilités offertes par l'intervalle de réglage, le niveau de la base de l'échancrure des membrures par rapport au sol.

Les membrures peuvent être réalisées comme des plaques, venues de coulée ou de construction mécano-soudée, et comportant essentiellement un voile vertical et un rebord périphérique, ces plaques pouvant être raidies par un ensemble de nervures connexes au voile et au rebord. Les entretoises dorsales et inférieure prennent appui sur les membrures par l'intermédiaire de portées en saillie sur celles-ci, et s'y assemblent par pièces filetées. Les membrures présentent systématiquement des portées d'assemblage supplémentaires, destinées à recevoir des entretoises étrangères à la structure de base, ces entretoises, dites supplémentaires, s'assemblant aux membrures de la même manière que celles qui appartiennent à la structure de base. Selon leur position dans la cellule et l'utilisation prévue de la cellule, ces entretoises peuvent avoir pour seule fonction de contribuer à accroître la rigidité de la structure portante, ou, en plus de cette fonction, celles de positionner et de supporter des appareillages fonctionnels.

Il suffit généralement que les portées supplémentaires prévues sur chacune des membrures soient au nombre de deux, alors localisées respectivement dans la partie supérieure de la forme en G (portée supérieure) et dans la partie inférieure de cette forme, à une certaine distance de la base de l'échancrure, sous celle-ci (portée avant). La portée supérieure est cependant alors d'une étendue suffisante pour recevoir deux entretoises côte à côte ou permettre de choisir une localisation quelconque d'une seule de celles-ci entre l'avant et l'arrière de la cellule, ou encore de recourir à une entretoise de grande largeur en forme de plaque. Dans la réalisation de la cellule que nous considérons comme la plus intéressante, le voile de chaque membrure est latéral pour celle-ci et se place du côté de la membrure intérieur à la cellule, c'est à dire qu'il limite latéralement le volume de travail maximal de celle-ci. Les portées destinées à recevoir les entretoises sont alors en saillie sur les voiles vers l'intérieur de la cellule, tandis que le rebord et les nervures sont entièrement localisées du côté opposé, c'est à dire extérieur de la membrure.

Dans cette réalisation de l'invention, la nervuration de chaque membrure et la saillie du rebord sur le voile peuvent être réalisées de manière à ménager à l'arrière de la membrure, c'est à dire à l'opposé de l'échancrure, du côté extérieur de la cellule, un logement dit logement principal, destiné à accueillir, au moins partiellement, l'intelligence de la cellule, les circuits électriques correspondants ainsi que les circuits de puissance électriques ou pneumatiques par exemple. Quand le volume à prévoir pour accueillir ce matériel est relativement faible, celui-ci peut être reçu directement dans le logement principal, sur une plaque rapportée au fond de celui-ci et assemblée à la membrure. Dans le cas contraire, le matériel en cause peut être contenu dans une armoire parallélipipédique, de préférence câblée d'avance, et c'est cette armoire qui prend place dans le logement principal où elle vient s'encastrer dans les membrures en faisant saillie latéralement sur le volume de la structure de base. L'armoire peut être une armoire ordinaire, mais aussi, quand la rigidité de la cellule l'exige, une armoire spéciale, elle même suffisamment rigide pour contribuer, une fois assemblée à la membrure, à la rigidité de la cellule.

D'autres logements, plus petits et éventuellement moins accessibles, existent naturellement à l'avant de la cellule, en-dessous et au-dessus de l'échancrure.

Les entretoises supérieures qui s'assemblent aux membrures, et dont la double fonction essentielle est de localiser et de supporter, en position suspendue, des appareillages fonctionnels, tout en accroissant la rigidité de la cellule sous les sollicitations que le fonctionnement de ces appareillages lui impose, peuvent prendre diverses formes. Ainsi, une entretoise supérieure prendra la forme d'une poutre à section haute quand l'appareillage qu'elle supporte exerce sur la cellule un effort vertical important tendant à fléchir cette entretoise. Une entretoise supérieure prendra la forme d'une plaque étendue quand l'appareillage fonctionnel qu'elle supporte exerce sur la cellule un couple important de moment vertical tendant à en tordre les membrures. Mais une entretoise supérieure peut aussi prendre la forme d'un cadre horizontal, notamment de manière à supporter un manipulateur cartésien. Les glissières principales du manipulateur sont alors supportées par les longerons du cadre qui s'assemblent d'autre part aux membrures, sur une partie importante de leur longueur au moins. Les traverses du cadre, qui ne peuvent restreindre le volume de travail du manipulateur, peuvent alors être rejetées au-delà des portées supérieures, sans empêcher que ces traverses contribuent à la rigidité de l'ensemble de la cellule, à la manière un peu affaiblie d'entretoises supérieures en forme de poutres qui seraient directement assemblées aux membrures.

L'entretoise supplémentaire qui s'assemble aux membrures sur les portées avant a généralement un rôle essentiel de support pour le produit en cours d'assemblage, et doit à cette fin offrir la réaction aux efforts d'assemblage appliqués au produit. Elle peut assumer cette fonction, simplement et directement, en prenant la forme d'un portique dont les montants s'assemblent aux portées avant, et dont l'entrait constitue une table rigide pour supporter le produit en cours d'assemblage.

L'entretoise avant, conformée en poutre ou en portique de faible hauteur inversé, peut aussi être utilisé pour positionner et supporter un appareil d'indexage, de levage et de réaction, qui fait ainsi partie intégrante de la cellule.

Quand la cellule doit comporter une entretoise avant et une entretoise supérieure localisée à l'aplomb de la première, et que l'effort appliqué au produit par l'appareillage que supporte l'entretoise supérieure est particulièrement important, il est fort intéressant de réunir ces entretoises par deux montants, soit que ces deux montants soient assemblés aux deux entretoises, soit, et de préférence, qu'ils forment avec les entretoises un cadre d'un seul tenant. Ce cadre, s'il est suffisamment rigide, ne transmet pas à la cellule les réactions à l'effort d'assemblage, la cellule ne supportant pour sa part que le poids du cadre et de tout ce qu'il porte. Dans cette configuration, la cellule ne peut évidemment opérer qu'en dérivation du flux de produits en cours d'assemblage. Il est aussi possible, en cas d'effort d'assemblage particulièrement important, de préférer renforcer la cellule elle-même en y ajoutant deux montants amovibles fixés à l'avant de la cellule, dans le prolongement des membrures de manière à fermer l'échancrure en dehors du volume de travail. Quatre portées d'assemblage supplémentaires doivent être prévues à cet effet sur les rebords des membrures, mais le placement de la cellule en dérivation du flux des produits en cours d'assemblage n'est plus inévitable.

Quelle que soit la configuration dans laquelle elle se présente, sauf celle qui réunit sous forme de cadre une entretoise supérieure et une entretoise avant, la cellule objet de l'invention peut prendre place le long d'un convoyeur du flux de produits en cours de montage (convoyeur principal) dans des conditions telles que ce convoyeur principal passe dans l'échancrure des membrures. Le convoyeur principal passe ainsi dans la cellule, mais pour autant que l'on évite de le faire supporter par la cellule, celle-ci peut être déplacée par rapport au convoyeur, perpendiculairement à celui-ci, avec la plus grande facilité, notamment pour être remplacée, presque instantanément, par une autre préparée d'avance.

Comme une immobilisation relative de la cellule par rapport au convoyeur principal, dans un plan horizontal, est souvent nécessaire pour éviter en service une tendance indésirable à une dérive de la position relative idéale cellule-convoyeur, il est prévu de créer entre la cellule et le convoyeur principal une liaison plane bilatérale dans un plan vertical parallèle à l'axe de ce convoyeur, liaison qui doit pouvoir être supprimée instantanément pour libérer totalement la cellule du convoyeur principal. Une telle liaison peut être simplement réalisée par deux verrous, chacun d'eux étant fixé aux membrures par le boîtier qui contient le pêne en position rentrée, son système de guidage et son mécanisme d'animation. Chaque verrou est positionnable de manière telle qu'il puisse être à volonté engagé dans une gâche prévue dans le châssis du convoyeur principal, quel qu'il soit, ou dégagé de cette gâche, pour établir ou supprimer la liaison.

La table de l'appareil d'indexage, de levage et de réaction que comporte éventuellement la cellule quand le convoyeur principal passe dans l'échancrure de ses membrures, doit toujours pouvoir être amenée en position suffisamment basse pour éviter toute interférence de la cellule avec le convoyeur principal dans tout déplacement de la cellule tendant à l'écarter de ce convoyeur.

Cette condition peut être réalisée sans problème par la disposition suivante, qui permet en outre de libérer au mieux le volume de la cellule situé à l'avant de celle-ci sous le convoyeur principal, notamment, mais pas seulement, pour y loger les jambes d'un opérateur assis. Il s'agit de faire supporter, par les membrures directement, un appareil d'indexage, de levage et de réaction dont la table est déplacée et immobilisée par deux mécanismes identiques, contenus dans des boîtiers séparés, fixés respectivement à chacune des portées avant, la synchronisation de ces deux mécanismes étant réalisée à travers la table mobile.

On peut considérer comme une variante de l'invention la cellule d'assemblage à configuration fonctionnelle adaptable dans laquelle le voile des membrures est médian pour celles-ci, le rebord périphérique qui en détermine la longueur s'étendant, de part et d'autre du voile, sur une partie au moins de son développement. Les nervures éventuelles sont alors, elles aussi, présentes de part et d'autre du voile, sur une partie au moins de son étendue.

Cette variante acquiert un véritable intérêt quand les entretoises s'assemblent au rebord de la membrure, sur des portées en saillie suffisante pour les recevoir. Pour que les entretoises s'assemblent aux rebords sur toute la largeur de ceux-ci, il faut alors que le voile soit ajouré au passage de chacune d'elles, ce qui affaiblit la rigidité propre des membrures. En revanche, les deux membrures latérales sont alors identiques, ce qui rationalise leur fabrication, et il est possible, dans des cellules multipostes, de prévoir une membrure intermédiaire, au moins. En outre, les portées supérieures d'assemblage peuvent être prévues à l'extérieur, aussi bien qu'à l'intérieur des membrures.

On observera cependant que le voile ne limite plus naturellement, dans cette variante, le volume de travail de la cellule : l'habillage peut s'en trouver quelque peu compliqué.

Cette variante de l'invention permet aussi toutes les configurations de la cellule qui ont été décrites ci-dessus; en cas d'utilisation d'une armoire rapportée pour pouvoir contenir les circuits électriques, il parait cependant difficile d'encastrer celle-ci dans une membrure réalisée selon cette variante: il faut rapporter l'armoire sur la membrure, ce qui en augmente quelque peu la largeur. L'option pour l'une ou l'autre variante pour la réalisation de la cellule objet de l'invention ne peut être qu'un choix inévitablement influencé par le type de ligne d'assemblage auquel on la destine plus spécialement.

Dans le cadre de cette variante de l'invention ou en dehors d'elle, la cellule à configuration adaptable peut s'accommoder d'un convoyeur principal que l'on impose de localiser à faible hauteur au-dessus du sol, si l'on prévoit que l'appareil d'indexage, de levage et de réaction, alors indispensable, est directement fixé à l'entretoise inférieure de la structure de base, sur une portée prévue à cet effet, indépendamment du type d'indexeur à installer, les membrures ne comportant alors aucune portée avant.

Enfin, quand la cellule est appelée à recevoir en position haute plusieurs appareillages fonctionnels, il est intéressant d'éviter une multiplication des entretoises en associant à la structure de base une structure de configuration particularisée, présentant elle-même plusieurs portées d'assemblage destinées à accueillir les appareillages en question. Ces appareillages peuvent éventuellement avoir été placés d'avance, essayés et réglés sur la structure de configuration avant que celle-ci soit rapportée sur la structure de base. Quand la structure est entièrement soudée, il est opportun d'assembler la structure de configuration à la structure de base, à la fois sur des portées horizontales et sur des portées frontales à prévoir sur les membrures, la branche supérieure du G caractérisant la forme de ces membrures pouvant être, dans ce but, raccourcie plus ou moins substantiellement.

Les avantages de la cellule à configuration fonctionnelle adaptable peuvent être synthétisés comme suit:
1) La structure de base, indépendante de toute configuration particulière de la cellule comme du caractère automatique ou manuel du poste à constituer, est une partie très substantielle de la cellule, et ne comporte qu'un petit nombre (de préférence quatre) d'éléments spécifiques de taille importante. Elle demande peu d'assemblages et obéit ainsi aux règles les plus fondamentales du D.F.A. (Design for Assembly). Le recyclage direct et presque illimité de cette structure de base importante permet d'en amortir le coût sur une longue période.
2) La forme en G des membrures, qui permet d'y accueillir le convoyeur principal sans l'enfermer dans la cellule, met l'utilisateur en mesure d'écarter rapidement la cellule du convoyeur sans toucher à celui-ci, et par conséquent, de remplacer la cellule par une autre, préparée d'avance, pratiquement sans interrompre la production. Mais avant tout, cette disposition permet une totale indépendance du convoyeur et de la cellule, rendant l'utilisation de celle-ci sans contrainte aucune sur le convoyage, et conservant la possibilité de créer entre chaque cellule une longueur librement choisie de convoyeur aux fins, par exemple, de constituer des stocks tampons.
3) L'utilisation d'entretoises supérieures à des fins mécaniques, d'une manière précise pour intégrer dans la cellule à configurer les appareillages fonctionnels en position suspendue, apporte par elle-même une contribution importante à la rigidité de la cellule et permet, en dégageant la surface de travail, l'utilisation la plus efficace d'une surface donnée.
4) La conception même de la cellule permet d'y regrouper tous les équipements nécessaires à son fonctionnement, et de les écarter, en bloc avec la cellule, du convoyeur principal, en évitant tout démontage.
5) La forme générale de la cellule lui confère à une échelle donnée une rigidité suffisante pour la plupart des opérations que demande l'assemblage de produits compatibles avec cette échelle; pour des opérations qui demandent une rigidité particulièrement élevée, les moyens de renforcement qui permettent d'accéder cette rigidité restent simples et peu contraignants sur le montage et l'utilisation de la cellule.
6) La conception de la structure portante permet de réaliser des cellules de largeur différente, notamment pour constituer des postes de travail simples ou multiples, par la seule adaptation de la longueur commune à toutes les entretoises.
7) La conception générale de la cellule laisse toujours grand ouvert un accès au volume de travail par l'arrière de la cellule, notamment pour y introduire les éléments à rapporter sur le produit en cours d'assemblage quand il s'agit d'une cellule d'implantation.

On peut se convaincre, à la lecture de ce qui précède, que la cellule objet de l'invention est naturellement porteuse d'une évolution des systèmes d'assemblage vers un aboutissement dans lequel, à chaque fonction d'un poste de travail correspondra une cellule type, l'ensemble des cellules types gardant en commun une seule structure de base, importante et universelle. Mais la conception de la cellule lui permet aussi de répondre aux besoins d'une phase transitoire et évolutive permettant de passer, aussi progressivement qu'on le souhaite, du stade actuel, où les cellules sont extrêmement diversifiées, à l'aboutissement qui vient d'être évoqué.

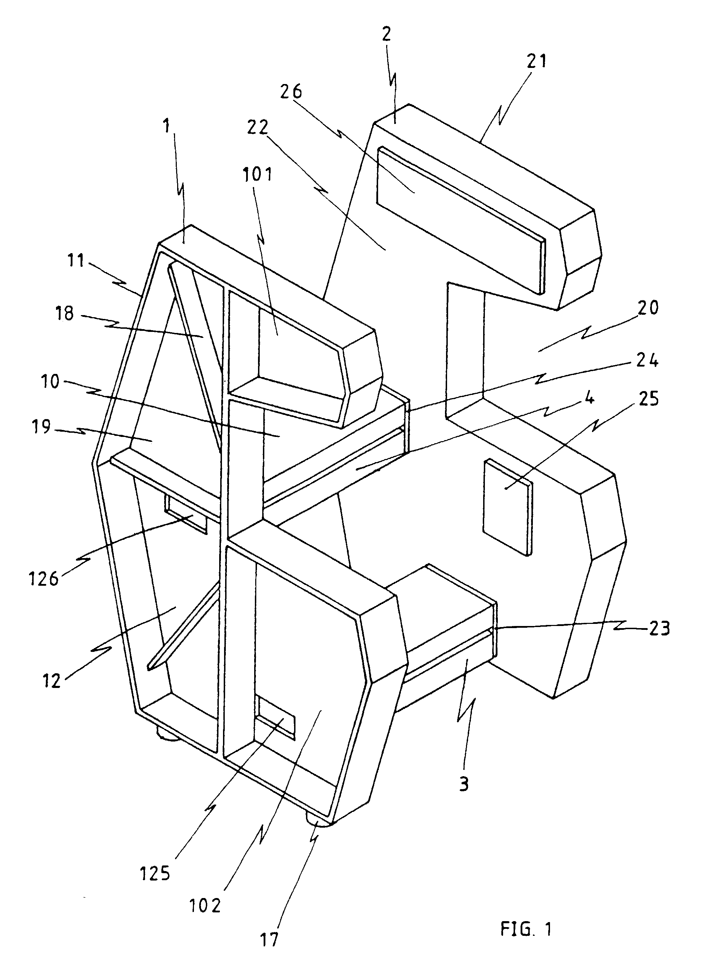

Les figures 1 à 15 montrent schématiquement, à titre d'exemples non limitatifs, diverses réalisations des dispositions originales caractérisant la cellule objet de l'invention. La figure 1 montre la structure de base, tandis que toutes les autres montrent des cellules dont la représentation incomplète permet de mettre en évidence, sur chaque figure, une particularité notoire de réalisation.

Sur la figure 1, représentant en axonométrie une réalisation de la structure de base, on identifie les membrures latérales 1 et 2 en forme de G, réalisées en un seul tenant, leurs échancrures 10 et 20, l'entretoise inférieure 3 et l'entretoise dorsale 4. Les membrures sont réalisées comme des plaques raidies présentant chacune un rebord périphérique 11 et 21. Les voiles 12 et 22 sont ici latéraux pour chacune des membrures et situés du côté de chaque membrure intérieur pour la cellule. Les entretoises inférieure et dorsale s'assemblent alors aux membrures respectivement sur les portées 13 (non visible) et 23, ainsi que 14 (non visible) et 24 en saillie sur les voiles 12 et 22 tout comme les portées avant 15 (non visible) et 25 et, plus étendues, les portées supérieures 16 (non visible) et 26, ces portées avant et supérieure étant destinées à recevoir des entretoises supplémentaires. Les pièces filetées d'assemblage des entretoises permanentes inférieure et dorsale ne sont pas montrées; les orifices 125 et 225 (non visible) ainsi que 126 et 226 (non visible) percés dans les voiles 12 et 22 dans l'axe des entretoises permanentes inférieure et dorsale permettent à celles-ci de jouer le rôle secondaire de gaines pour des tuyauteries ou des câbles nécessaires au fonctionnement de la cellule. On reconnaît encore, sous le rebord des membrures des pieds tels que 17 (ici non réglables) permettant aux membrures de jouer leur rôle d'interface de la cellule avec le sol, ainsi qu'à l'intérieur de la membrure 1 du côté du voile extérieur à la cellule, des nervures telles que 18, connexes au voile 12 et au rebord 11; les nervures correspondantes de la membrure 2 ne sont évidemment pas visibles. Dans la membrure 1 encore, le voile 12 et le rebord 11 ménagent à l'arrière de la cellule (à l'opposé des échancrures qui correspondent à l'avant de celle-ci) le logement principal 19 partiellement occupé par les nervures; vers l'avant de la cellule, on trouve entre le voile et le rebord deux logements plus petits 101 et 102 respectivement situés sur et sous l'échancrure 10. Les logements correspondants dans la membrure 2 ne sont pas visibles.

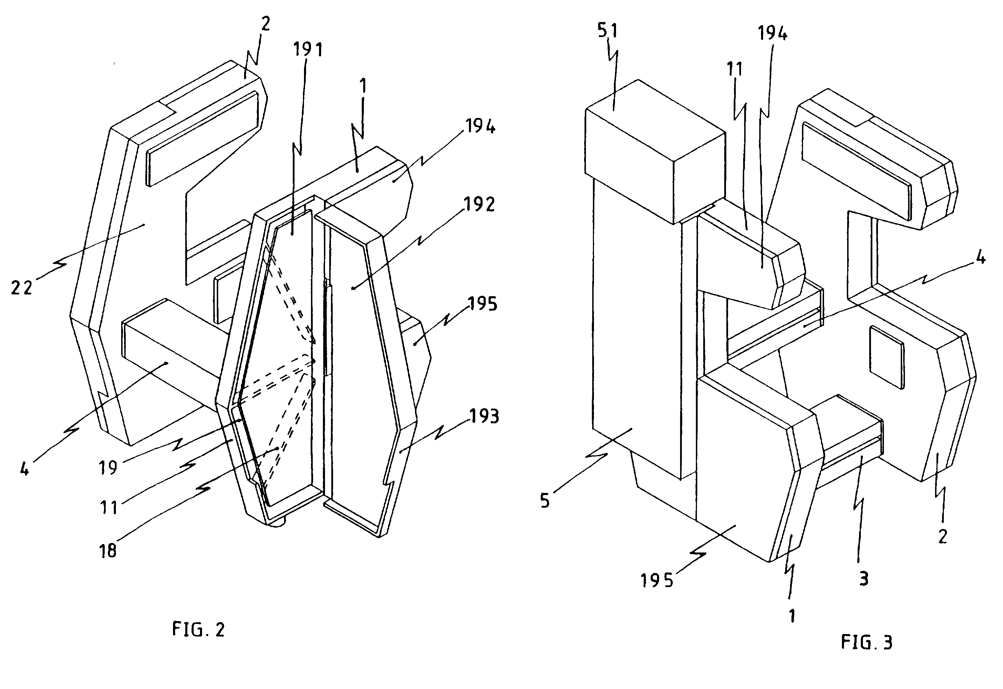

La figure 2 montre une réalisation de la cellule où l'on retrouve les membrures 1 et 2 avec leurs voiles latéraux 12 (non visible) et 22 et les entretoises 3 (non visible) et 4 de la structure de base. Dans cette réalisation, le rebord 11 est dégagé autour du logement principal 19 jusqu'au sommet des nervures telles que 18, et un plaque 191 est rapporté au fond du logement pour y fixer les éléments des circuits électriques et des circuits de puissance qui peuvent y être contenus. Le logement principal 19 est refermé par une porte 192 dont le rebord 193 occupe, en position fermée, la partie dégagée du rebord 11. Le dégagement du rebord 11 permet en alternative, sans intervention sur la membrure, la réalisation de la figure 3 dans laquelle le logement principal 19 est occupé par une armoire parallélipipédique 5, qui déborde la membrure vers l'arrière et latéralement: c'est cette armoire qui reçoit alors les éléments de circuits quand ils sont trop encombrants pour être contenus dans le logement 19 de la réalisation de la figure 2. Cette armoire s'encastre dans la membrure en affleurant le rebord 11 dans sa partie supérieure de manière qu'une deuxième armoire 51, plus petite et plus profonde, puisse prendre appui sur la première 5 et, étant complètement extérieure au volume de la membrure, couvrir dans sa partie supérieure le rebord 11 de manière à limiter sa saillie latérale sur la première armoire: une armoire telle que 51, profonde mais limitée en volume, est dans certains cas nécessaire pour accueillir un automate volumineux.

Dans la figure 3 comme dans la figure 2, les logements secondaires de la membrure 1 sont fermés par des panneaux amovibles 194 et 195 qui font partie de l'habillage de la cellule.

La cellule incomplète représentée à la figure 4, destinée à constituer un poste de solidarisation par emmanchement, comporte une entretoise supérieure 61 assemblée aux membrures 1 et 2 sur les portées supérieures 16 (non visible) et 26. Dans cette entretoise en caisson est encastré un pot de presse 611 siège d'une réaction à l'effort d'emmanchement qui tend à fléchir l'entretoise 61; celle-ci se présente donc avec les proportions d'une poutre qui occupe toute la hauteur disponible sur les portées. La longueur encore disponible des portées laisse la place suffisante pour rapporter sur elles une deuxième entretoise supportant, par exemple, en position suspendue, comme le pot de presse, un robot PRR.

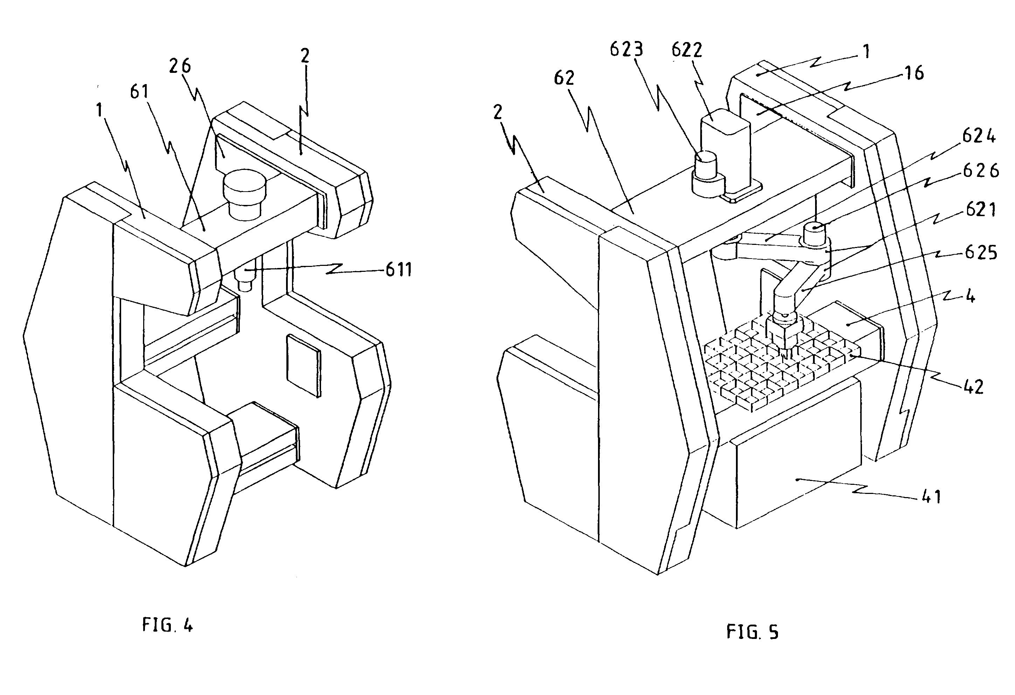

L'intégration d'un tel robot 621 dans la cellule est représentée à la figure 5. le robot suspendu est encastré dans l'entretoise 62 assemblée à l'arrière des portées supérieure 16 et 26 (non visible). L'entretoise 62 reste une poutre, de large base et de hauteur moyenne. Emergent de la face supérieure de l'entretoise, le carter 622 du robot contenant son guidage prismatique P, l'animation en translation verticale correspondante, ainsi que le guidage de la première rotation R, animée par le moteur 623. En dessous de l'entretoise 62, on voit apparaître le bras 624, siège de la première rotation R, et l'avant-bras 625 du robot PRR, siège de la deuxième rotation R, dont le guidage est la liaison rotoïde 626.

Le robot prélève les implants dans un stock localisé à l'arrière de la cellule par où il peut être facilement alimenté. Ce stock est schématisé par le plateau alvéolé 42 supporté par l'entretoise 4 de la structure de base. Dans cet exemple, un coffret 41 contenant l'automate programmable de la cellule a été logé dans l'espace situé entre les membrures, sous l'entretoise 4 à laquelle il suspendu.

La figure 6 présente une cellule incomplète destinée à constituer un poste de solidarisation par vissage. Le système de vissage multibroche est supporté en position suspendue par l'entretoise supérieure 63. Cette entretoise prend ici logiquement la forme d'une plaque étendue, assemblée aux portées supérieures 16 (non visible) et 26, dont presque toute la longueur est ainsi utilisée. La plaque support 631 de quatre broches de vissage telles que 632 est guidée en translation verticale dans l'entretoise 63 par l'intermédiaire de quatre glissières telles que 633, l'animation de cette translation étant réalisée par le vérin d'avance 634 dont le corps est assemblé à l'entretoise 63.

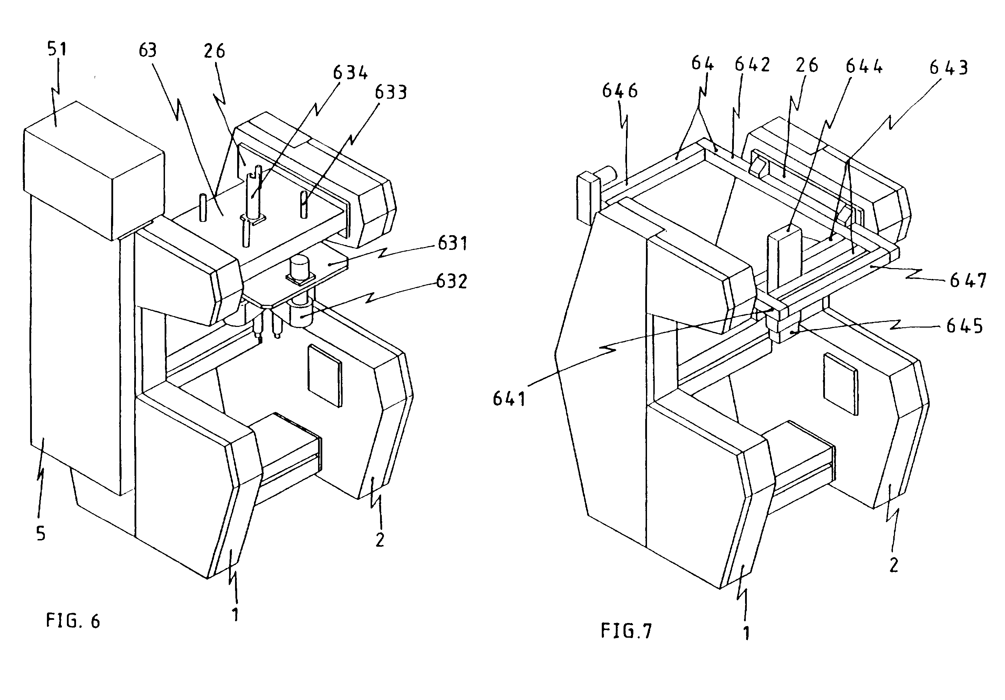

Dans la cellule incomplète schématisée par la figure 7, l'entretoise supérieure unique 64 se présente comme un cadre horizontal, parce qu'elle doit être traversée sur presque toute son étendue par certains éléments de l'appareillage suspendu. Cet appareillage est un manipulateur cartésien dont les composants essentiels sont les longerons du cadre 641 et 642 portant les glissières principales (non visibles) guidant en translation horizontale le chariot principal 643, qui guide lui-même en translation horizontale orthogonale le chariot secondaire 644 guidant en translation verticale le porte-outil 645. Le cadre 64 est fermé par les traverses 646 et 647 qui, pour donner au porte-outil une surface d'action horizontale suffisante, sont rejetés au-delà des portées supérieures 16 (non visible) et 26 des membrures 1 et 2.

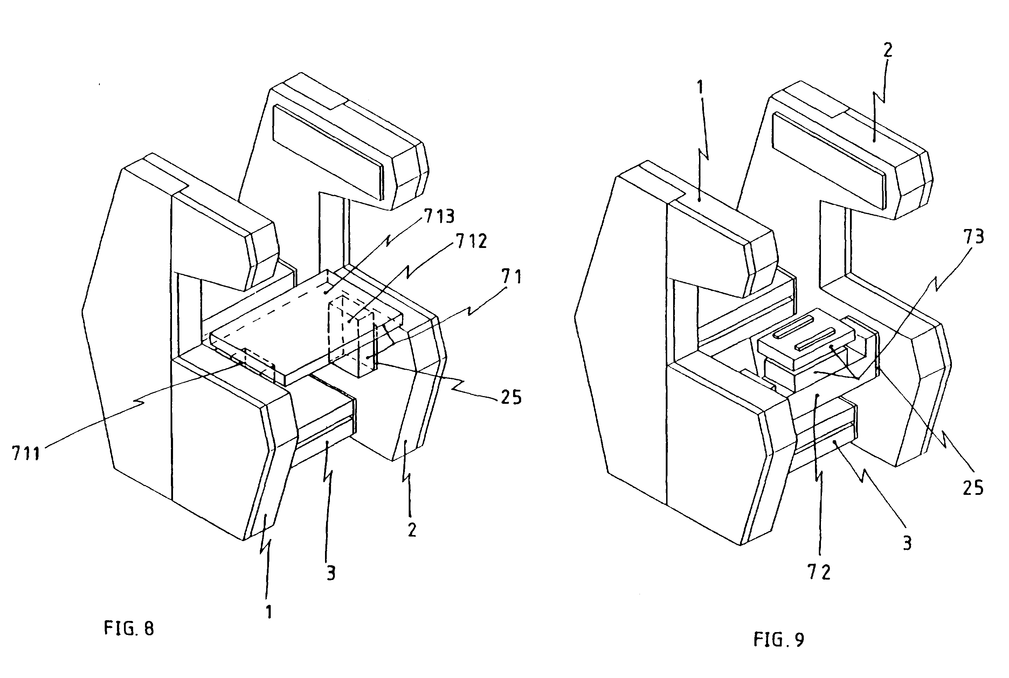

La cellule incomplète de la figure 8 comporte une entretoise supplémentaire avant 71. La forme de cette entretoise est importante: c'est celle d'un portique dont les montants 711 et 712 s'assemblent aux membrures 1 et 2 sur les portées avant 15 (non visible) et 25, et dont l'entrait 713, plus large que les montants, constitue une table capable de supporter le produit en cours de montage dans un poste de travail exploité par un opérateur, par exemple. Non seulement la forme particulière de cette entretoise permet de positionner la surface de la table au niveau convenable, mais elle dégage un espace important à l'avant de la cellule, permettant par exemple d'accueillir dans de bonnes conditions de confort les jambes d'un opérateur assis. C'est en effet pour constituer un poste où l'on peut assurer à la main le montage complet d'un sous-ensemble, dans un système d'assemblage dégénéré en ce seul poste, que cette configuration de la cellule s'avérera intéressante.

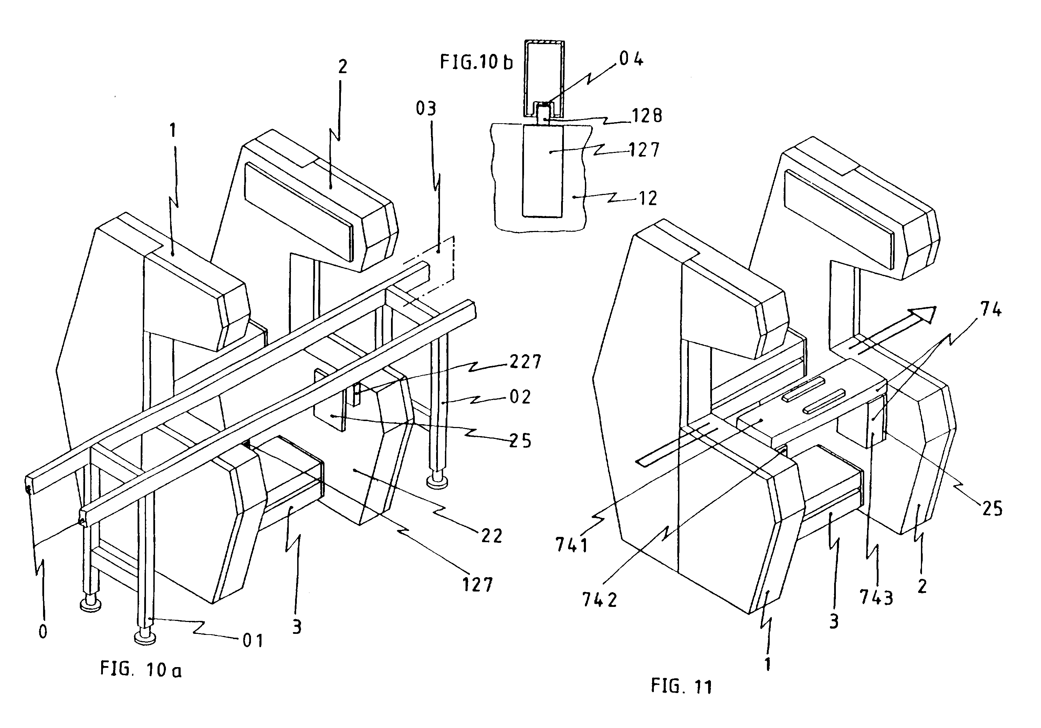

Sur la figure 9, la cellule incomplète représentée comporte une entretoise avant 72 en forme de poutre échancrée qui lui donne dans une certaine mesure l'allure d'un portique inversé. cette poutre assemblée aux membrures 1 et 2 sur les portées avant 15 (non visible) et 25, accueille dans son échancrure un appareil d'indexage, de levage et de réaction 73, classique dans sa conception mais faisant ici partie de l'appareillage intégré à la cellule. Une cellule ainsi équipée est naturellement destinée à être placée, en service, dans le flux de produit de manière telle que le convoyeur principal passe dans l'échancrure des membrures, comme le montre la figure 10-a. On voit clairement sur cette figure que le convoyeur principal 0 n'est pas supporté par la cellule, mais bien par des supports indépendants 01 et 02: il est donc possible d'en écarter la cellule, perpendiculairement à son axe, sans être en aucune manière gêné par le convoyeur, sans en compromettre la stabilité et donc, en principe, sans même interrompre le convoyage.

Dans l'exemple de la figure 10-a, on a cependant créé entre la cellule et la châssis du convoyeur principal, une liaison plane bilatérale dans un plan vertical parallèle à son plan de symétrie 03. Cette liaison est réalisée par deux verrous dans les boîtiers 127 et 227 sont respectivement fixés aux voiles 12 (non visible) et 22 des membrures 1 et 2, à côté des portées avant 15 (non visible) et 25. Les pênes tels que 128 de ces verrous peuvent à volonté être engagés dans une gâche 04 du châssis de convoyeur principal comme le montre schématiquement la figure 10-b, ou être rentrés dans le boîtier correspondant 127 du verrou correspondant, de manière à ne pas entraver, au moment où elle devient nécessaire la mobilité transversale de la cellule par rapport au convoyeur principal.

La cellule incomplète illustrée à la figure 11 présente un appareil intégré d'indexage, de levage et de réaction 74 qui ne s'appuie sur aucune entretoise avant. Cet appareil comporte deux systèmes identiques de guidage et d'animation de la table mobile 741 contenus dans les boîtiers 742 et 743 séparés et fixés respectivement aux portées avant 15 (non visible) et 25. Les deux mécanismes sont synchronisés mécaniquement, à travers la table mobile 741, par un système de transmission non représenté. On voit que cette organisation de l'appareil d'indexage, de levage et de réaction dégage à peu près autant de place, sous la table mobile, que sous la table fixe représentée à la figure 8.

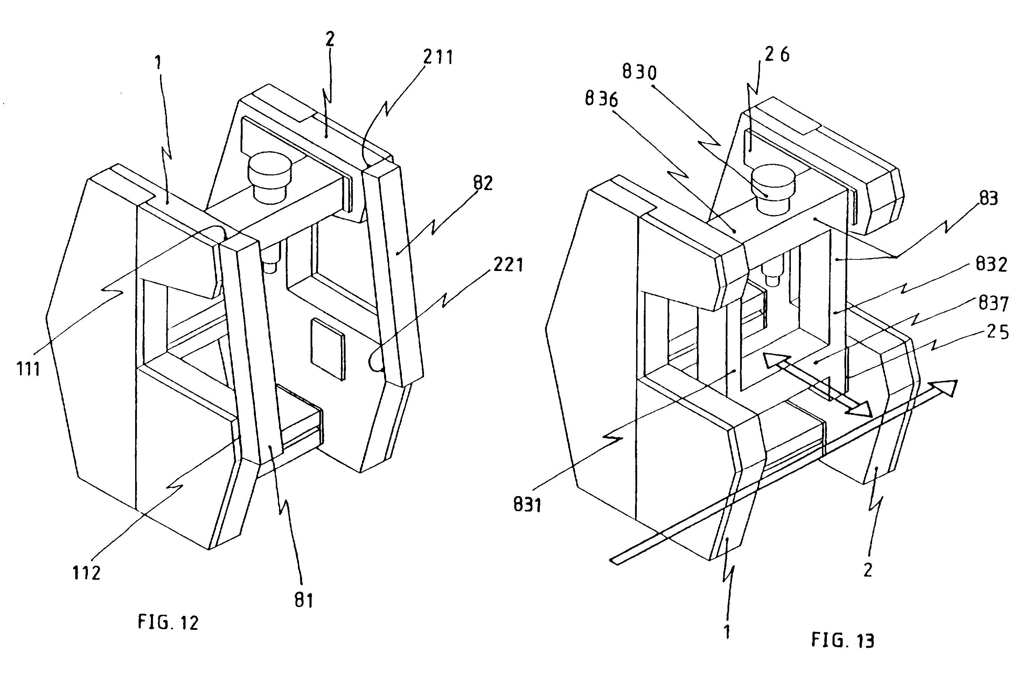

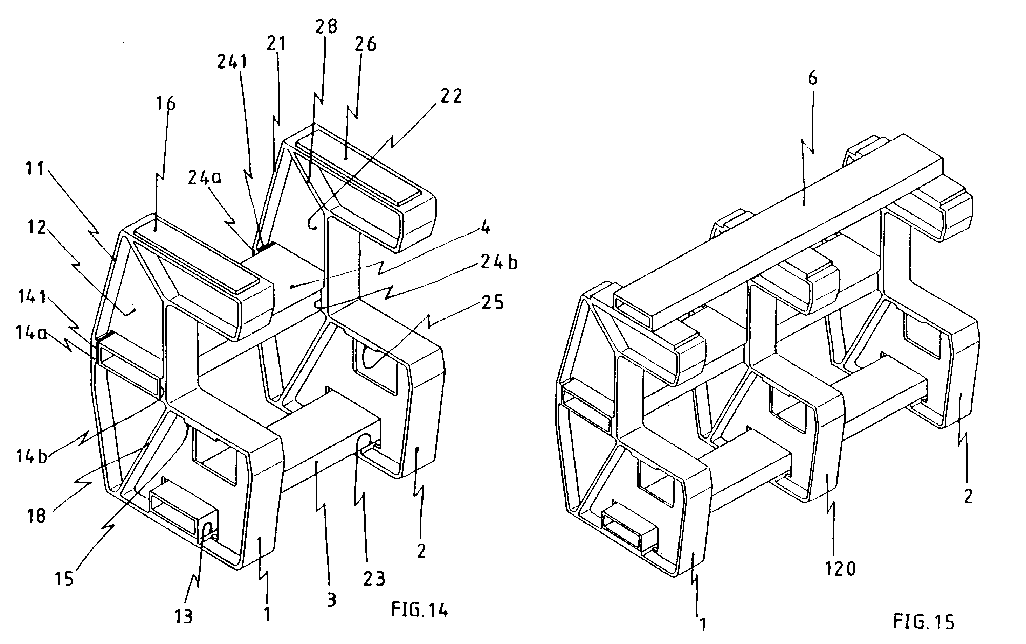

Les cellules présentées aux figures 12 et 13 sont des cellules destinées à constituer, comme celle de la figure 4 un poste de solidarisation pour emmanchement et les réactions à cet effort sont considérées comme importantes et donc susceptibles de provoquer dans la cellule ouverte des déformations excessives.

Dans l'exemple de la figure 12, la rigidité de la cellule vis à vis de ces réactions est fortement accrue par deux montants frontaux 81 et 82, assemblés aux membrures 1 et 2 sur des portées supplémentaires frontales obliques 111, 112, 211 et 221 (cachées) prévues à cet effet au-dessus et en-dessous de leurs échancrures. Si ces montants sont assemblés aux membrures de manière à pouvoir les en séparer rapidement, le convoyeur principal peut encore passer dans les échancrures des membrures comme décrit à la figure 10-a sans que se trouve trop compliqué et ralenti l'écartement de la cellule par rapport au convoyeur.

Dans la cellule de la figure 13, le problème posé par les réactions à l'effort d'emmanchement est résolu plus élégamment, mais d'une manière qui impose à la cellule de travailler en dérivation du convoyeur principal comme le schématisent les flèches au trait indiquées sur la figure. L'entretoise supérieure supportant le pot de presse 830 fait partie d'un cadre 83 intégrant l'entretoise supérieure 836, deux montants 831 et 832 et une entretoise 837, et c'est ce cadre qui s'assemble aux portées supérieure 16 (non visible) et 26 ainsi qu'aux portées avant 15 (non visible) et 25.

La figure 14 montre un exemple de variante pour la structure de base de la cellule objet de l'invention. Les voiles 12 et 22 des membrures sont à mi-largeur des membrures 1 et 2 respectivement, tandis que les rebords périphériques 11 et 21 qui en déterminent la largeur s'étendent dans cet exemple sur toute la périphérie des voiles, symétriquement de part et d'autre du voile. Des nervures telles que 18 et 28, connexes au voile et au rebord, s'étendent de part et d'autre du voile. Les entretoises inférieure 3 et dorsale 4 s'assemblent ici au rebord des membrures, sur des saillies 13 et 23 ainsi que 14a, 14b, 24a, 24b, toutes sur la face interne des rebords, de part et d'autre des voiles, ajourés pour pouvoir être traversés par les entretoises. Comme l'entretoise dorsale possède un assemblage double avec chaque membrure, on évite l'hyperstaticité par la présence de cales épaisseurs telles que 141 et 241 sur l'une au moins des portées 14 et 24, a ou b.

Pour permettre l'assemblage d'entretoises supplémentaires, des portées d'assemblage supplémentaires sont prévues sur le rebord de la membrure 1, l'une, la portée avant 15, à l'intérieur du rebord 11 et l'autre, la portée supérieure 16, à l'extérieur de celui-ci, ainsi que sur le rebord de la membrure 2, l'une, la portée avant 25, à l'intérieur du rebord 21, et l'autre, la portée supérieure 26, à l'extérieur de ce rebord. Ces portées permettent d'assembler les entretoises supplémentaires aux membrures de la même manière que les entretoises inférieure 3 et dorsale 4 de la structure de base.

La cellule incomplète de la figure 15 comporte une membrure intermédiaire 120, identique aux deux membrures latérales 1 et 2, contribuant utilement à la rigidité d'une cellule à deux postes de travail, dans l'un desquels au moins, un appareillage de solidarisation devrait être supporté par l'entretoise supérieure 6.

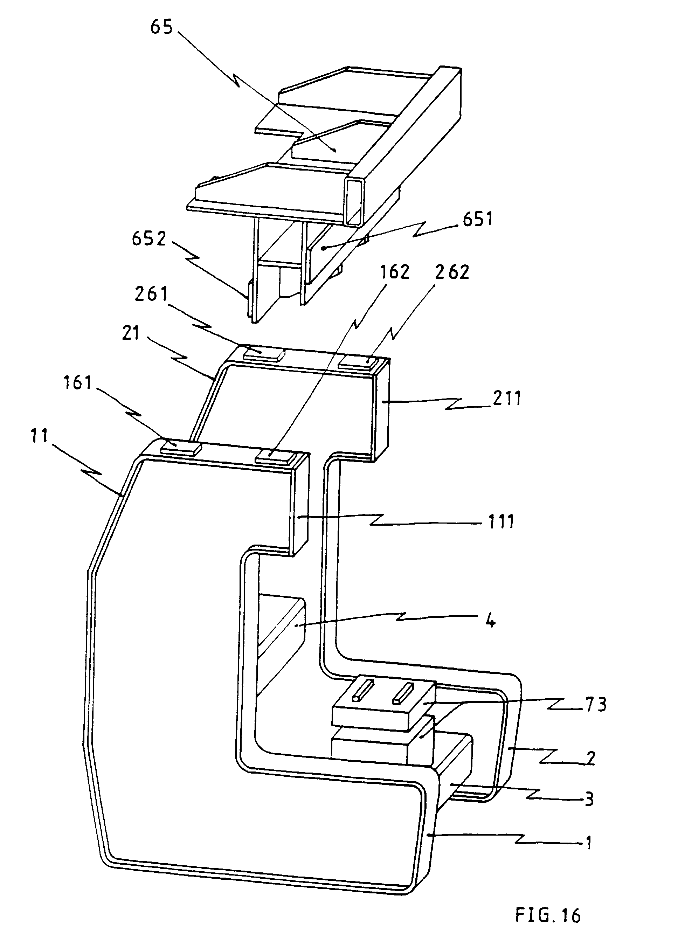

La figure 16 montre une cellule dont la structure de base est supposée intégralement soudée et où le voile des membrures 1 et 2 est médian. Dans cette cellule où les membrures ne comportent pas de portée avant, l'appareil d'indexage, de levage et de réaction 73 est directement reçu sur l'entretoise inférieure 3 de la structure de base.

Cette même figure 16 illustre le cas où les deux appareillages fonctionnels que la cellule doit recevoir en position haute sont regroupés sur une structure particularisée de configuration 65 à laquelle ils s'assemblent par des portées telles que 651 et 652. La première peut recevoir en position frontale un manipulateur cartésien YZ et la seconde un pick and place alimentant le manipulateur (la cellule est supposée être alimentée par l'arrière). La structure de base étant supposée entièrement soudée, la structure de configuration s'assemble à la structure de base par des portées horizontales 161, 261, 162 et 262, et par des portées frontales 111 et 211. Comme la structure de configuration accueille à l'avant un manipulateur frontal, ces portées 111 et 211 doivent être reportées vers l'arrière de la cellule, ce qui impose de raccourcir fortement la partie horizontale du G caractérisant la forme des membrures.

## Revendications

1. Cellule d'assemblage à configuration fonctionnelle adaptable, constituant un poste de travail simple ou multiple, commandé automatiquement ou exploité par un opérateur, et agissant directement dans le flux de produits en cours de montage ou en déviation de celui-ci, ladite cellule comportant une structure de base libre de toute table et indépendante de toute configuration fonctionnelle particulière, caractérisée en ce qu'elle comporte :
- deux membrures latérales (1, 2), de préférence d'un seul tenant, les membrures étant échancrées en forme de G, parallèles à un même plan vertical et comportant essentiellement un voile (12, 22) et un rebord périphérique (11, 21), ces deux membrures réalisant par l'intermédiaire de pieds éventuellement réglables, l'interface avec le sol,
- un système de liaison entre ces membrures (1, 2) constitué de deux entretoises, l'une dite entretoise inférieure (3) et située à la partie inférieure des membrures, et l'autre dite entretoise dorsale (4) située à l'opposé des échancrures (10, 20) à une hauteur voisine de la base de ces échancrures, et en ce que la configuration adaptable de la cellule est essentiellement obtenue en rapportant entre les membrures, notamment en position haute, des entretoises supplémentaires auxquelles se fixent les appareillages fonctionnels, ces entretoises supplémentaires étant assemblées aux membrures par des portées en saillie (15, 16, 25, 26) prévues sur les membrures indépendamment de toute configuration particulière.

2. Cellule d'assemblage à configuration fonctionnelle adaptable, conforme à la revendication 1, caractérisée en ce que les entretoises inférieure et dorsale (3 et 4) appartenant à la structure de base s'assemblent aux membrures, par pièces filetées, sur des portées en saillie (13, 23, 14, 24) prévues à cet effet, et en ce que les entretoises supplémentaires s'assemblent aux membrures de la même manière que les entretoises de base.

3. Cellule d'assemblage à configuration fonctionnelle adaptable, conforme à la revendication 1, dans laquelle les membrures sont réalisées en construction soudée, caractérisée en ce que les entretoises inférieure et dorsale (3, 4) appartenant à la structure de base sont soudées sur les membrures, et en ce que les entretoises supplémentaires s'assemblent aux membrures par pièces filetées, dans la structure de base assemblée, sur les portées en saillies prévues à cet effet.

4. Cellule d'assemblage à configuration fonctionnelle adaptable conforme à la revendication 2, caractérisée en ce que les portées d'assemblage supplémentaires (15, 16, 25, 26) prévues sur chaque membrure (1 et 2) sont au nombre de deux, l'une, dite portée supérieure (16, 26), localisée dans la partie supérieure de la forme en G et l'autre, dite portée avant (15, 25), localisée dans la partie inférieure de la forme en G, à l'avant sous l'échancrure (10, 20), et en ce que la portée supérieure (16) est d'une étendue suffisante pour recevoir deux entretoises.

5. Cellule d'assemblage à configuration fonctionnelle adaptable conforme à la revendication 2, caractérisée en ce que le voile (12, 22) appartenant à chaque membrure (1, 2) est latéral pour celle-ci et se situe du côté de la membrure intérieur à la cellule dont il limite ainsi latéralement le volume de travail maximal, en ce que le rebord (11, 21) et des nervures (18) éventuelles sont entièrement localisés du côté extérieur de la membrure et en ce que les portées (13, 14, 15, 16, 23, 24, 25 et 26) destinées à recevoir les entretoises appartiennent au voile (12, 22) de chaque membrure.

6. Cellule d'assemblage à configuration fonctionnelle adaptable conforme à la revendication 2, caractérisée en ce que le voile (11, 22) de chacune des membrures (1, 2) est médian pour celle-ci, en ce que le rebord périphérique (11, 21) s'étend sur une partie au moins de son développement de part et d'autre du voile, en ce que des nervures (18, 28) sont présentes simultanément de part et d'autre du voile au moins sur une partie de l'étendue de celui-ci et en ce que les entretoises s'assemblent au rebord de chaque membrure, le voile étant éventuellement ajouré en conséquence.

7. Cellule d'assemblage à configuration fonctionnelle adaptable conforme à la revendication 5, caractérisée en ce que le mode de nervuration et la saillie du rebord (11, 21) sur le voile (12, 22) de chaque membrure (1 ou 2) ménagent à l'arrière de celle-ci, c'est-à-dire à l'opposé de son échancrure (10, 20) du côté de la membrure extérieur à la cellule un logement dit logement principal (19) susceptible d'accueillir, au moins partiellement, les circuits électriques de la cellule, soit que ceux-ci soient reçus directement sur une plaque (191) rapportée au fond du logement et assemblée à la membrure, soit qu'ils soient contenus dans une armoire parallélipipédique (5) éventuellement câblée d'avance et qui prend place dans le logement principal en s'encastrant dans la membrure.

8. Cellule d'assemblage à configuration fonctionnelîe adaptable conforme à la revendication 2 ou 3, caractérisée en ce qu'elle comporte une entretoise supplémentaire au moins, cette entretoise n'ayant aucune autre fonction essentielle que de participer à la rigidité de l'ensemble de la cellule.

9. Cellule d'assemblage à configuration fonctionnelle adaptable conforme à la revendication 4, caractérisée en ce qu'elle comporte une entretoise supplémentaire au moins, fixée aux portées supérieures (16, 26) des membrures (1, 2), cette entretoise étant dite entretoise supérieure, et en ce que cette entretoise supérieure contribue à la rigidité de l'ensemble de la cellule et supporte, en position suspendue, un équipement dit fonctionnel au moins, c'est-à-dire un équipement participant à l'une des tâches au moins qu'implique la fonction de la cellule, cette entretoise supérieure prenant la forme d'une poutre à section haute (61) quand l'appareillage qu'elle supporte exerce sur la cellule un effort vertical important tendant à fléchir l'entretoise et prenant la forme d'une plaque étendue (62, 63) quand l'appareillage fonctionnel qu'elle supporte exerce sur la cellule un couple important de moment vertical tendant à en tordre les membrures.

10. Cellule d'assemblage à configuration fonctionnelle adaptable conforme à la revendication 4, caractérisée en ce qu'elle comporte un cadre (64) dont les longerons (641, 642) s'assemblent aux membrures (1, 2), sur les portées supérieures (16, 26), et dont les traverses (646, 647) éventuellement rejetées au-delà des portées supérieures se comportent néanmoins, quant à leur action sur la rigidité de l'ensemble de la cellule, comme une double entretoise supérieure, et en ce que les longerons (641, 642) de ce cadre sont conçus de manière à supporter la paire de glissières principales d'un manipulateur cartésien.

11. Cellule d'assemblage à configuration fonctionnelle adaptable conforme à la revendication 4 ou 9, caractérisée en ce qu'elle comporte une entretoise supplémentaire (71) fixée aux portées avant (15, 25) des membrures (1, 2), cette entretoise étant dite entretoise avant, et en ce que cette entretoise avant présente une forme de portique dont les montants (711, 712) servent à son assemblage aux portées avant (15, 25) et dont l'entrait sert de table rigide (713), recevant le produit en cours d'assemblage, et capable de constituer, s'il y a lieu, l'élément de réaction aux efforts appliqués au produit par tout appareillage fonctionnel éventuellement présent dans la cellule.

12. Cellule d'assemblage à configuration fonctionnelle adaptable conforme à la revendication 4, caractérisée en ce qu'elle comporte en position frontale deux montants (81, 82) localisés dans le prolongement des membrures (1, 2) de manière à en fermer l'échancrure (10, 20) en-dehors du volume de travail et en ce que ces montants s'assemblent aux membrures de manière à pouvoir en être écartés rapidement.

13. Cellule d'assemblage à configuration fonctionnelle adaptable conforme à la revendication 4, mais uniquement en dérivation du flux de produits en cours de montage, caractérisée en ce qu'elle comporte simultanément une entretoise avant fixée à la portée avant (15, 25) des membrures (1, 2) et une entretoise supérieure fixée à la portée supérieure (16, 26) des membrures sensiblement à l'aplomb de la première, et en ce que ces deux entretoises (836, 837) sont réunies par deux montants (831, 832) localisés au voisinage immédiat des membrures, soit que ces deux montants soient assemblés aux deux entretoises, soit qu'ils forment avec elles un cadre d'un seul tenant (83).

14. Cellule d'assemblage à configuration fonctionnelle adaptable conforme à la revendication 6, à poste multiple, caractérisée en ce qu'elle comporte, outre les membrures latérales (1, 2), une membrure intermédiaire (120) au moins, et en ce que toutes les membrures (1, 2, 120) sont identiques.

15. Cellule d'assemblage à configuration fonctionnelle adaptable conforme à la revendication 1, constituant un poste de travail participant à un système d'assemblage, dans lequel le flux de produits en cours de montage est véhiculé par un convoyeur, dit convoyeur principal (0), qui passe dans l'échancrure (10, 20) des membrures (1, 2) quand la cellule est en place, caractérisée en ce que la relation de la cellule avec le convoyeur principal, supporté par ailleurs, se limite à une liaison plane bilatérale dans un plan vertical parallèle au plan de symétrie (03) du convoyeur principal, cette liaison pouvant être supprimée instantanément pour libérer totalement la cellule du convoyeur principal.

16. Cellule d'assemblage à configuration fonctionnelle adaptable conforme à la revendication 15, caractérisée en ce que la liaison plane verticale bilatérale de la cellule avec le convoyeur principal (0) est réalisée par deux verrous, chacun de ces verrous étant fixé aux membrures (1, 2) par leur boîtier (127, 227) qui contient le pêne (128) en position rentrée, son guidage et le mécanisme qui l'anime et en ce que le pêne (128) de chaque verrou peut être à volonté engagé dans une gâche (04) prévue dans le châssis du convoyeur ou dégagée de cette gâche pour établir ou supprimer la liaison.

17. Cellule d'assemblage à configuration fonctionnelle adaptable conforme aux revendication 15, caractérisée en ce qu'elle comporte une entretoise supplémentaire (72) fixée aux portées avant (15, 25) des membrures (1, 2), et en ce que cette entretoise supporte au moins un appareil d'indexage, de levage et de réaction (73), à un niveau tel que la table de cet appareil peut être amenée en position suffisamment basse pour éviter toute interférence de la cellule avec le convoyeur principal (0) dans tout déplacement de la cellule tendant à l'écarter du convoyeur principal.

18. Cellule d'assemblage à configuration fonctionnelle adaptable conforme aux revendications 4 et 15, caractérisée en ce que ses membrures (1, 2) supportent, en lieu et place d'une entretoise avant, un appareil d'indexage, de levage et de réaction (74) dont la table (741) est déplacée et immobilisée par deux mécanismes identiques contenus dans des boîtiers séparés (742, 743) fixés respectivement à chacune des portées avant (15, 25), la synchronisation de ces deux mécanismes étant réalisée à travers la table mobile (741).

19. Cellule d'assemblage à configuration fonctionnelle adaptable conforme à la revendication 1, utilisable lorsque un convoyeur principal (O) doit se trouver à faible hauteur au-dessus du sol, caractérisée en ce qu'un appareil d'indexage, de levage et de réaction (73) est directement fixé à l'entretoise inférieure (3) de la structure de base, sur une portée prévue à cet effet, indépendamment du type d'indexeur à installer, les membrures (1,2) ne comportant dans ce cas aucune portée avant.

20. Cellule d'assemblage à configuration fonctionnelle adaptable, conforme à la revendication 1 et, de préférence, à la revendication 3, caractérisée en ce qu'elle accueille en position haute une structure de configuration particularisée (65) qui s'assemble à la structure de base simultanément sur des portées horizontales (161, 162) et (261, 262) et sur des portées frontales (111) et (211) prévues sur les membrures (1, 2) la branche supérieure du G caractérisant la forme de celles-ci pouvant être dans ce but, raccourcie plus ou moins substantiellement.

21. Utilisation de la cellule d'assemblage à configuration fonctionnelle adaptable selon l'une quelconque des revendications précédentes pour un poste de travail participant à un système d'assemblage ou constituant à lui seul ce système.

## Claims

1. Assembly cell with adaptable functional configuration, constituting a single or multiple workstation, controlled automatically or used by an operator, and acting directly in the flow of products during assembly or as a deviation therefrom, said cell comprising a basic structure free of any table and independent of any particular functional configuration, characterized in that it comprises:
- two lateral frameworks (1, 2), preferably made as a single piece, cut out in a G shape, parallel to one same vertical plane and essentially comprising a web (12, 22) and a peripheral flange (11, 21), these two frameworks providing an interface with the ground via feet which may be adjustable,
- a system for linking these frameworks (1, 2) together, consisting of two struts, one known as the lower strut (3) situated at the lower part of the frameworks, and the other known as the dorsal strut (4) situated on the opposite side to the cut-outs (10, 20) at a height close to the base of these cut-outs,
and in that the adaptable configuration of the cell is essentially obtained by adding between the frameworks, particularly in a high position, additional struts to which the functional equipment is fixed, these additional struts being assembled with the frameworks by projecting bearing surfaces (15, 16, 25, 26) provided on the frameworks independently of any particular configuration.

2. Assembly cell with adaptable functional configuration, according to claim 1, characterized in that the lower and dorsal struts (3 and 4) belonging to the basic structure are assembled with the frameworks by threaded components on projecting bearing surfaces (13, 23, 14, 24) provided for this purpose, and in that the additional struts are assembled with the frameworks in the same way as the basic struts.

3. Assembly cell with adaptable functional configuration, according to claim 1, in which the frameworks are produced as a welded construction, characterized in that the lower and dorsal struts (3, 4) belonging to the basic structure are welded to the frameworks, and in that the additional struts are assembled with the frameworks by threaded components, in the assembled basic structure, on the projecting bearing surfaces provided for this purpose.

4. Assembly cell with adaptable functional configuration according to claim 2, characterized in that there are two additional assembly bearing surfaces (15, 16, 25, 26) provided on each framework (1 and 2), one of these surfaces, known as the upper bearing surface (16, 26) located in the upper part of the G shape and the other, known as the front bearing surface (15, 25) located in the lower part of the G shape, at the front under the cut-out (10, 20), and in that the upper bearing surface (16) is broad enough to take two struts.

5. Assembly cell with adaptable functional configuration according to claim 2, characterized in that the web (12, 22) belonging to each framework (1, 2) is lateral for this latter and is on that side of this framework that will be on the inside of the cell, the maximum working volume of which it thus limits laterally, in that the flange (11, 21) and any ribs (18) are located entirely on the outside of the framework and in that the bearing surfaces (13, 14, 15, 16, 23, 24, 25 and 26) intended to take the struts belong to the web (12, 22) of each framework.

6. Assembly cell with adaptable functional configuration according to claim 2, characterized in that the flange (11, 22) of each of the frameworks (1, 2) is in the middle of this framework, in that the peripheral flange (11, 21) extends over at least part of its development on each side of the web, in that ribs (18, 28) are present simultaneously on both sides of the web at least over part of the extent of the latter and in that the struts are assembled to the flange of each framework, the web possibly having an opening for this.

7. Assembly cell with adaptable functional configuration according to claim 5, characterized in that the method of ribbing and the projection of the flange (11, 21) from the web (12, 22) of each framework (1 or 2) are housed in the rear of this framework, that is to say at the opposite side to its cut-out (10, 20) on that side of the framework that will be on the outside of the cell, a housing known as the main housing (19) capable of accommodating, at least in part, the electric circuits of the cell, these either being received directly on a plate (191) attached to the end wall of the housing and assembled to the framework, or being contained in a parallelepipedal cabinet (5) possibly pre-wired, and which sits in the main housing being set into the framework.

8. Assembly cell with adaptable functional configuration according to claim 2 or 3, characterized in that it comprises at least one additional strut, this strut having no essential function other than to participate in the rigidity of the cell as a whole.

9. Assembly cell with adaptable functional configuration according to claim 4, characterized in that it comprises at least one additional strut fixed to the upper bearing surfaces (16, 26) of the frameworks (1, 2), this strut being a so-called upper strut, and in that this upper strut contributes to the rigidity of the cell as a whole and supports, in a suspended position, at least one set of so-called functional equipment, that is to say equipment that plays a part in at least one of the tasks that the operation of the cell involves, this upper strut adopting the shape of a beam with a tall section (61) when the equipment it supports exerts on the cell a strong vertical force tending to bend the strut, and adopting the form of a broad plate (62, 63) when the functional equipment it supports exerts on the cell a strong vertical turning moment tending to twist its frameworks.

10. Assembly cell with adaptable functional configuration according to claim 4, characterized in that it comprises a frame (64), the longitudinal members (641, 642) of which are assembled to the frameworks (1, 2) on the upper bearing surfaces (16, 26), and the cross-members (646, 647) of which, possibly projected beyond the upper bearing surfaces, nonetheless behave, as far as their action on the rigidity of the cell as a whole is concerned, like a double upper strut, and in that the longitudinal members (641, 642) of this frame are designed in such a way as to support the pair of main slideways of a cartesian manipulator.

11. Assembly cell with adaptable functional configuration according to claim 4 or 9, characterized in that it comprises an additional strut (71) fixed to the front bearing surfaces (15, 25) of the frameworks (1, 2), this strut being a so-called front strut, and in that this front strut has the form of a portal frame, the uprights (711, 712) of which serve to assemble it with the front bearing surfaces (15, 25), and the stringer of which serves as a rigid table (713), receiving the product being assembled and capable of constituting, if need be, the element for reacting to the forces applied to the product by any functional equipment that may be present in the cell.

12. Assembly cell with adaptable functional configuration according to claim 4, characterized in that it comprises, in a frontal position, two uprights (81, 82) located in extension of the frameworks (1, 2) so as to close their cut-out (10, 20) outside of the working volume and in that these uprights are assembled with the frameworks in such a way that they can be separated quickly therefrom.

13. Assembly cell with adaptable functional configuration according to claim 4, but only as a deviation from the flow of products being assembled, characterized in that it simultaneously comprises a front strut fixed to the front bearing surface (15, 25) of the frameworks (1, 2) and an upper strut fixed to the upper bearing surface (16, 26) of the frameworks approximately vertically in line with the previous one, and in that these two struts (836, 837) are connected by two uprights (831, 832) located in the immediate vicinity of the frameworks, these two uprights either being assembled with the two struts or forming a one-piece frame (83) with them.

14. Assembly cell with adaptable functional configuration according to claim 6, with multiple workstations, characterized in that it comprises, in addition to the lateral frameworks (1, 2), at least one intermediate framework (120), and in that all of the frameworks (1, 2, 120) are identical.

15. Assembly cell with adaptable functional configuration according to claim 1, constituting a workstation involved in an assembly system, in which the flow of products being assembled is transported by a conveyor, called the main conveyor (0), which passes through the cut-out (10, 20) of the frameworks (1, 2) when the cell is in place, characterized in that the relationship between the cell and the main conveyor, which is supported by some other means, is limited to a bilateral planar connection in a vertical plane parallel to the plane of symmetry (03) of the main conveyor, it being possible for this connection to be eliminated instantaneously in order completely to release the cell from the main conveyor.

16. Assembly cell with adaptable functional configuration according to claim 15, characterized in that the bilateral vertical planar connection between the cell and the main conveyor (0) is achieved by two locks, each of these locks being fixed to the frameworks (1, 2) by their casing (127, 227) which contains the locking bolt (128) in the retracted position, its guidance and the mechanism which drives it, and in that the locking bolt (128) of each lock can be engaged at will in a striker plate (04) provided in the chassis of the conveyor or disengaged from this striker plate in order to make or break the connection.

17. Assembly cell with adaptable functional configuration according to claim 15, characterized in that it comprises an additional strut (72) fixed to the front bearing surfaces (15, 25) of the frameworks (1, 2), and in that this strut supports at least one piece of indexing, lifting and reaction equipment (73), at a level such that the table of this equipment can be brought into a low enough position to avoid any interference between the cell and the main conveyor (0) in any movement of the cell tending to move it away from the main conveyor.

18. Assembly cell with adaptable functional configuration according to claims 4 and 15, characterized in that its frameworks (1, 2) support, instead of a front strut, indexing, lifting and reaction equipment (74), the table (741) of which is moved and immobilized by two identical mechanisms contained in separate casings (742, 743) fixed respectively to each of the front bearing surfaces (15, 25), these two mechanisms being synchronized through the moving table (741).

19. Assembly cell with adaptable functional configuration according to claim 1, which can be used when the main conveyor (0) has to be at low height off the ground, characterized in that indexing, lifting and reaction equipment (73) is fixed directly to the lower strut (3) of the basic structure, on a bearing surface provided for this purpose, independently of the type of indexer to be installed, the frameworks (1, 2) in this case having no front bearing surface.

20. Assembly cell with adaptable functional configuration according to claim 1 and, preferably, claim 3, characterized in that it houses in a raised position a structure (65) with a specialized configuration which is assembled with the basic structure both on horizontal bearing surfaces (161, 162) and (261, 262) and on front bearing surfaces (111) and (211) provided on the frameworks (1, 2), it being possible, for this purpose, for the upper branch of the G that characterizes the shape of these frameworks to be shortened somewhat substantially.

21. Use of the assembly cell with adaptable functional configuration according to any one of the preceding claims for a workstation involved in an assembly system or constituting this system by itself.

## Patentansprüche

1. Zusammenbauzelle mit anpaßbarer funktioneller Konfiguration, die einen einfachen oder vielfachen Arbeitsplatz darstellt, der automatisch gesteuert wird oder von einer Bedienungsperson genutzt wird, und der bei dem Fluß von zusammenzubauenden Produkten oder dem davon abgezweigten Fluß direkt wirkt, wobei die Zelle eine Basisstruktur umfaßt, die frei von einem Tisch ist, und unabhängig von jeder besonderen funktionellen Konfiguration ist, dadurch gekennzeichnet, daß sie umfaßt:
- zwei seitliche Gurtungen (1, 2), vorzugsweise aus einem Stück, wobei die Gurtungen G-förmig ausgeschnitten sind, parallel zu derselben vertikalen Ebene sind, und im wesentlichen eine Abdeckung (12, 22) und einen peripheren Rand (11, 21) umfassen, wobei diese zwei Gurtungen mittels eventuell einstellbarer Füße die Verbindung mit dem Boden herstellen,
- ein Verbindungssystem zwischen den Gurtungen (1, 2), das aus zwei Streben besteht, einer sogenannten unteren Strebe (3), die in dem unteren Teil der Gurtungen gelegen ist, und einer sogenannten hinteren Strebe (4), die auf der entgegengesetzten Seite der Ausschnitte (10, 20) in einer Höhe gelegen ist, die nahe bei der Basis dieser Ausschnitte liegt,
und daß die anpaßbare Konfiguration der Zelle im wesentlichen dadurch erhalten wird, daß zwischen den Gurtungen, insbesondere in der oberen Position, zusätzliche Streben angefügt werden, an denen die funktionellen Apparaturen befestigt werden, wobei diese zusätzlichen Streben über vorspringende Auflageflächen (15, 16, 25, 26), die auf den Gurtungen unabhängig von jeder besonderen Konfiguration vorgesehen sind, mit den Gurtungen verbunden werden.

2. Zusammenbauzelle mit anpaßbarer funktioneller Konfiguration, gemäß Anspruch 1, dadurch gekennzeichnet, daß die untere und die hintere Strebe (3 und 4), die der Basisstruktur angehören, auf zu diesem Zweck vorgesehenen, vorspringenden Auflageflächen (13, 23, 14, 24) durch Gewindeteile mit den Gurtungen zusammengebaut werden, und daß die zusätzlichen Streben auf die gleiche Weise wie die Basisstreben mit den Gurtungen zusammengebaut werden.

3. Zusammenbauzelle mit anpaßbarer funktioneller Konfiguration, gemäß Anspruch 1, bei der die Gurtungen als geschweißte Konstruktion verwirklicht sind, dadurch gekennzeichnet, daß die untere und die hintere Strebe (3, 4), die der Basisstruktur angehören, auf die Gurtungen aufgeschweißt sind, und daß die zusätzlichen Streben bei der zusammengebauten Basisstruktur auf den zu diesem Zweck vorgesehenen, vorspringenden Auflageflächen durch Gewindeteile mit den Gurtungen zusammengebaut werden.

4. Zusammenbauzelle mit anpaßbarer funktioneller Konfiguration gemäß Anspruch 2, dadurch gekennzeichnet, daß die zusätzlichen Zusammenbau-Auflageflächen (15, 16, 25, 26), die auf jeder Gurtung (1 und 2) vorgesehen sind, zwei Auflageflächen umfassen, eine sogenannte obere Auflagefläche (16, 26), die in dem oberen Teil der G-Form gelegen ist, und eine sogenannte vordere Auflagefläche (15, 25), die in dem unteren Teil der G-Form, vorne unter dem Ausschnitt (10, 20) gelegen ist, und daß die obere Auflagefläche (16) eine genügende Ausdehnung hat, um zwei Streben aufzunehmen.

5. Zusammenbauzelle mit anpaßbarer funktioneller Konfiguration, gemäß Anspruch 2, dadurch gekennzeichnet, daß die Abdeckung (12, 22), die jeder Gurtung (1, 2) angehört, eine seitliche Abdeckung ist und auf der bezüglich der Zelle inneren Seite der Gurtung gelegen ist, und so das maximale Arbeitsvolumen der Zelle seitlich begrenzt, daß der Rand (11, 21) und die eventuellen Rippen (18) vollständig auf der äußeren Seite der Gurtung gelegen sind, und daß die Auflageflächen (13, 14, 15, 16, 23, 24, 25 und 26), die dazu bestimmt sind, die Streben aufzunehmen, der Abdeckung (12, 22) jeder Gurtung angehören.

6. Zusammenbauzelle mit anpaßbarer funktioneller Konfiguration, gemäß Anspruch 2, dadurch gekennzeichnet, daß die Abdeckung (12, 22) von jeder der Gurtungen (1, 2) eine Mittelabdeckung ist, daß der periphere Rand (11, 21) sich über mindestens einen Teil seiner Abwicklung beiderseits der Abdeckung erstreckt, daß Rippen (18, 28) zumindest über einen Teil der Ausdehnung der Abdeckung gleichzeitig beiderseits der Abdeckung vorhanden sind, und daß die Streben an dem Rand jeder Gurtung zusammengebaut werden, wobei die Abdeckung eventuell entsprechend ausgespart ist.

7. Zusammenbauzelle mit anpaßbarer funktioneller Konfiguration, gemäß Anspruch 5, dadurch gekennzeichnet, daß die Verrippung und der über die Abdeckung (12, 22) jeder Gurtung (1 oder 2) vorspringende Rand (11, 21) über die Abdeckung (12, 22) jeder Gurtung (1 oder 2) auf der Rückseite der Gurtung, das heißt, auf der zu ihrem Ausschnitt (10, 20) entgegengesetzten Seite, auf der bezüglich der Zelle äußeren Seite der Gurtung ein sogenanntes hauptsächliches Aufnahmefach (19) bilden, das geeignet ist, die elektrischen Kreise der Zelle zumindest teilweise aufzunehmen, wobei diese entweder auf einer Platte (191), die auf dem Boden des Aufnahmefachs angefügt ist und mit der Gurtung zusammengebaut ist, direkt aufgenommen werden, oder in einem quaderförmigen Schrank (5) enthalten sind, der eventuell vorher verkabelt wurde, und der in dem hauptsächlichen Aufnahmefach untergebracht wird, wobei er in die Gurtung eingebaut wird.

8. Zusammenbauzelle mit anpaßbarer funktioneller Konfiguration, gemäß Anspruch 2 oder 3, dadurch gekennzeichnet, daß sie mindestens eine zusätzliche Strebe umfaßt, wobei diese Strebe keine andere wesentliche Funktion hat, als zu der Steifigkeit der gesamten Zelle beizutragen.

9. Zusammenbauzelle mit anpaßbarer funktioneller Konfiguration, gemäß Anspruch 4, dadurch gekennzeichnet, daß sie mindestens eine zusätzliche Strebe umfaßt, die an den oberen Auflageflächen (16, 26) der Gurtungen (1, 2) befestigt ist, wobei diese Strebe obere Strebe genannt wird, und daß diese obere Strebe zu der Steifigkeit der gesamten Zelle beiträgt, und mindestens eine sogenannte funktionelle Ausrüstung in der aufgehängten Position trägt, das heißt, eine Ausrüstung, die zu mindestens einer der Aufgaben beiträgt, die die Funktion der Zelle umfaßt, wobei diese obere Strebe die Form eines Balkens (61) mit hohem Querschnitt hat, wenn die Apparatur, die sie trägt, auf die Zelle eine große vertikale Kraft ausübt, die darauf abzielt, die Strebe durchzubiegen, und diese obere Strebe die Form einer flachen Platte (62, 63) hat, wenn die funktionelle Apparatur, die sie trägt, auf die Zelle ein großes vertikales Drehmoment ausübt, das darauf abzielt, die Gurtungen der Zelle zu verdrehen.

10. Zusammenbauzelle mit anpaßbarer funktioneller Konfiguration, gemäß Anspruch 4, dadurch gekennzeichnet, daß sie einen Rahmen (64) umfaßt, dessen Längsträger (641, 642) auf den oberen Auflageflächen (16, 26) mit den Gurtungen (1, 2) zusammengebaut werden, und dessen Querträger (646, 647), die eventuell außerhalb der oberen Auflageflächen angeordnet sind, sich dennoch, was ihre Wirkung auf die Steifigkeit der gesamten Zelle betrifft, wie eine doppelte obere Strebe verhalten, und daß die Längsträger (641, 642) dieses Rahmens so ausgelegt sind, daß sie die zwei Hauptschlitten eines kartesischen Manipulators tragen.

11. Zusammenbauzelle mit anpaßbarer funktioneller Konfiguration, gemäß Anspruch 4 oder 9, dadurch gekennzeichnet, daß sie eine zusätzliche Strebe (71) umfaßt, die an den vorderen Auflageflächen (15, 25) der Gurtungen (1, 2) befestigt ist, wobei diese Strebe vordere Strebe genannt wird, und daß diese vordere Strebe die Form eines Portalrahmens aufweist, dessen Pfosten (711, 712) zu ihrem Zusammenbau mit den vorderen Auflageflächen (15, 25) dienen, und dessen Binderbalken als steifer Tisch (713) dient, der das zusammenzubauende Produkt aufnimmt, und der gegebenenfalls das Rückwirkungselement bildet für die Kräfte, die durch jede funktionelle Apparatur, die eventuell in der Zelle untergebracht ist, auf das Produkt aufgebracht werden.

12. Zusammenbauzelle mit anpaßbarer funktioneller Konfiguration, gemäß Anspruch 4, dadurch gekennzeichnet, daß sie in der frontalen Position zwei Pfosten (81, 82) aufweist, die in der Verlängerung der Gurtungen (1, 2) so angeordnet sind, daß der Ausschnitt (10, 20) außerhalb des Arbeitsvolumens verschlossen wird, und daß die Pfosten mit den Gurtungen so zusammengebaut 5 werden, daß sie rasch abgenommen werden können.

13. Zusammenbauzelle mit anpaßbarer funktioneller Konfiguration, gemäß Anspruch 4, aber nur bei Abzweigung des Produktflusses während der Montage, dadurch gekennzeichnet, daß sie gleichzeitig eine an der vorderen Auflagefläche (15, 25) der Gurtungen (1, 2) befestigte, vordere Strebe und eine an der oberen Auflagefläche (16, 26) der Gurtungen, im wesentlichen senkrecht über der ersten Strebe befestigte, obere Strebe umfaßt, und daß diese zwei Streben (836, 837) durch zwei Pfosten (831, 832) miteinander verbunden sind, die unmittelbarer Nähe der Gurtungen angeordnet sind, oder daß diese zwei Pfosten mit den zwei Streben zusammengebaut sind, oder daß sie mit ihnen einen Rahmen (83) aus einem einzigen Stück bilden.

14. Zusammenbauzelle mit anpaßbarer funktioneller Konfiguration, gemäß Anspruch 6, mit mehreren Arbeitsplätzen, dadurch gekennzeichnet, daß sie außer den seitlichen Gurtungen (1, 2) mindestens eine Zwischengurtung (120) umfaßt, und daß alle Gurtungen (1, 2, 120) identisch sind.

15. Zusammenbauzelle mit anpaßbarer funktioneller Konfiguration, gemäß Anspruch 1, die einen Arbeitsplatz darstellt, der an einem Zusammenbausystem beteiligt ist, bei dem der Fluß von zusammenzubauenden Produkten von einem Förderer, der Hauptförderer (0) genannt wird, befördert wird, der in dem Ausschnitt (10, 20) der Gurtungen (1, 2) läuft, wenn die Zelle an ihrem Platz ist, dadurch gekennzeichnet, daß sich die Beziehung der Zelle zu dem Hauptförderer, der im übrigen getragen wird, auf eine bilaterale, ebene Verbindung in einer vertikalen Ebene beschränkt, die parallel zu der Symmetrieebene (03) des Hauptförderers ist, wobei diese Verbindung augenblicklich beseitigt werden kann, um die Zelle des Hauptförderers vollständig freizugeben.

16. Zusammenbauzelle mit anpaßbarer funktioneller Konfiguration, gemäß Anspruch 15, dadurch gekennzeichnet, daß die bilaterale, vertikale, ebene Verbindung der Zelle mit dem Hauptförderer (0) durch zwei Verriegelungen verwirklicht ist, wobei jede dieser Verriegelungen an den Gurtungen über ihr Gehäuse (127, 227) befestigt ist, das den Riegel (128) in der zurückgezogenen Position, seine Führung und den Mechanismus, der in betätigt, enthält, und daß der Riegel (128) jeder Verriegelung nach Belieben in eine in dem Chassis des Förderers vorgesehene Schließkappe (04) eingeschoben werden kann oder aus dieser Schließkappe herausgezogen werden kann, um die Verbindung herzustellen oder zu beseitigen.

17. Zusammenbauzelle mit anpaßbarer funktioneller Konfiguration, gemäß Anspruch 15, dadurch gekennzeichnet, daß sie eine zusätzliche Strebe (72) umfaßt, die an den vorderen Auflageflächen (15, 25) der Gurtungen (1, 2) befestigt ist, und daß diese Strebe mindestens einen Weiterschalt-, Hebe- und Rückwirkungsapparat (73) auf einem solchen Niveau trägt, daß der Tisch dieses Apparates in eine genügend niedrige Position gebracht werden kann, um einen Zusammenstoß der Zelle mit dem Hauptförderer (0) bei der Verschiebung der Zelle, um sie von dem Hauptförderer zu entfernen, zu vermeiden.

18. Zusammenbauzelle mit anpaßbarer funktioneller Konfiguration, gemäß den Ansprüchen 4 und 15, dadurch gekennzeichnet, daß die Gurtungen (1, 2) anstelle einer vorderen Strebe einen Weiterschalt-, Hebe- und Rückwirkungsapparat (74) tragen, dessen Tisch (741) verschoben und festgestellt wird durch zwei identische Mechanismen, die in getrennten Gehäusen (742, 743) enthalten sind, die an jeder der vorderen Auflageflächen (15, 25) befestigt sind, wobei die Synchronisation dieser zwei Mechanismen über den beweglichen Tisch (741) verwirklicht ist.

19. Zusammenbauzelle mit anpaßbarer funktioneller Konfiguration, gemäß Anspruch 1, die verwendbar ist, wenn ein Hauptförderer (0) sich in geringer Höhe über dem Boden befinden soll, dadurch gekennzeichnet, daß ein Weiterschalt-, Hebe- und Rückwirkungsapparat (73) an der unteren Strebe (3) der Basisstruktur auf einer zu diesem Zweck vorgesehenen Auflagefläche direkt befestigt ist, unabhängig von dem einzubauenden Weiterschaltvorrichtungs-Typ, wobei die Gurtungen (1, 2) in diesem Fall keine vordere Auflagefläche umfassen.

20. Zusammenbauzelle mit anpaßbarer funktioneller Konfiguration, gemäß Anspruch 1 und vorzugsweise Anspruch 3, dadurch gekennzeichnet, daß sie in der oberen Position eine Struktur (65) mit kundenspezifischer Konfiguration aufnimmt, die gleichzeitig auf horizontalen Auflageflächen (161, 162) und (261, 262) und vorderen Auflageflächen (111) und (211), die auf den Gurtungen (1, 2) vorgesehen sind, mit der Basisstruktur zusammengebaut wird, wobei der obere Zweig des G's die Form der Auflageflächen kennzeichnet, die mit diesem Ziel mehr oder weniger stark verkürzt werden kann.

21. Verwendung der Zusammenbauzelle mit anpaßbarer funktioneller Konfiguration, gemäß irgendeinem der vorhergehenden Ansprüche, für einen Arbeitsplatz, der an einem Zusammenbausystem beteiligt ist, oder dieses System allein darstellt.
